# EUROPÄISCHE PATENTSCHRIFT

(11) **EP 3 350 040 B1**
(45) Veröffentlichungstag und Bekanntmachung des Hinweises auf die Patenterteilung: **30.10.2019**
(21) Anmeldenummer: 16738766.1
(22) Anmeldetag: 13.07.2016
(51) Int. Cl.: B60T 13/74, F16H 25/20, F16H 25/24

(54) **BREMSKRAFTVERSTÄRKER UND BREMSEINRICHTUNG MIT EINEM DERARTIGEN BREMSKRAFTVERSTÄRKER**
BRAKE BOOSTER AND BRAKING DEVICE HAVING SUCH A BRAKE BOOSTER
SERVOFREIN ET SYSTÈME DE FREINAGE ÉQUIPÉ D'UN TEL SERVOFREIN

(30) Priorität: 14.09.2015 DE 102015217531
(43) Veröffentlichungstag der Anmeldung: 25.07.2018
(73) Patentinhaber: Robert Bosch GmbH, 70442 Stuttgart (DE)
(72) Erfinder: OHM, Andreas, 74635 Kupferzell (DE); WEISSINGER, Daniel, 70825 Korntal-Muenchingen (DE); NAGEL, Willi, 71686 Remseck/Hochdorf (DE); DEBERLING, Andreas, 71638 Ludwigsburg (DE)
(86) Internationale Anmeldenummer: PCT/EP2016/066632
(87) Internationale Veröffentlichungsnummer: WO 2017/045797

(56) Entgegenhaltungen:
- WO-A1-2014/115874
- DE-A1-102012 014 361
- DE-A1-102013 006 795

## Beschreibung

Die Erfindung betrifft einen Bremskraftverstärker für einen Hauptbremszylinder eines Kraftfahrzeugs, mit einem Antriebsmotor, der durch ein Getriebe mit einem Druckkolben für den Hauptbremszylinder verbunden oder verbindbar ist, wobei das Getriebe eine Rotationsbewegung des Antriebsmotors in eine Translationsbewegung des Druckkolbens zum Betätigen des Hauptbremszylinders wandelt, wobei das Getriebe eine drehbare Spindelmutter und eine drehfeste Spindelstange mit ineinandergreifenden Trapezgewinden aufweist.

Ferner betrifft die Erfindung eine Bremseinrichtung mit einem derartigen Bremskraftverstärker.

### Stand der Technik

Bremskraftverstärker und Bremseinrichtungen der eingangs genannten Art sind aus dem Stand der Technik bereits bekannt. So offenbart beispielsweise die Offenlegungsschrift DE 10 2012 014 361 A1 einen Bremskraftverstärker für einen Hauptbremszylinder eines Kraftfahrzeugs, der einen Antriebsmotor und ein den Antriebsmotor mit einem Druckkolben des Hauptbremszylinders verbindendes Getriebe aufweist. Das Getriebe weist dabei einen Abschnitt auf, der als Spindelgetriebe ausgebildet ist, um eine Rotationsbewegung des Antriebsmotors in eine Translationsbewegung des Druckkolbens zur Betätigung des Hauptbremszylinders zu wandeln. Das Spindelgetriebe weist dazu eine Spindelmutter mit einem Innengewinde und eine Spindelstange mit einem Außengewinde auf, wobei die beiden Gewinde in Eingriff miteinander stehen, um die Rotationsbewegung in eine Translationsbewegung zu wandeln. Es ist bekannt, Spindelgetriebe mit einem Trapezgewinde zu versehen, sodass sowohl das Innengewinde als auch das Außengewinde als Trapezgewinde ausgebildet sind und entsprechend ineinander greifen. Zu der Auslegung von Trapezgewindeverzahnungen ist die DIN-Norm 103 bekannt, die für eine Materialpaarung Stahl-Stahl ausgelegt ist und vorsieht, Flankenspiele zwischen den Trapezgewinden, also zwischen dem Außengewinde und dem Innengewinde, möglichst klein zu halten, um bei einem Richtungswechsel von Kraft und Bewegung Lärm und Geräusche zu vermeiden. Aus der Offenlegungsschrift WO 2014/115874 A1 geht ein Trapezgewinde hervor, dessen Flankenspiel größer als sein Fußspiel und größer als sein Kopfspiel ausgebildet ist.

### Offenbarung der Erfindung

Der erfindungsgemäße Bremskraftverstärker mit den Merkmalen des Anspruchs 1 hat den Vorteil, dass die Lebensdauer des Bremskraftverstärkers im Vergleich zu bekannten Bremskraftverstärkern der gattungsgemäßen Art vergrößert wird. Erfindungsgemäß wird dies dadurch erreicht, dass die ineinandergreifenden Trapenzgewinde ein Flankenspiel und ein Kopfspiel aufweisen, die jeweils größer als ein Fußspiel ausgebildet sind. Die Erfindung sieht somit Spiele zwischen den Trapezgewinden vor, die sich gezielt voneinander unterscheiden. Dabei wird unter dem Kopfspiel das radiale Spiel zwischen dem Zahnkopf des Außengewindes und dem Zahngrund des Innengewindes, und unter dem Fußspiel, das Spiel zwischen dem Zahngrund des Außengewindes und dem Zahnkopf des Außengewindes verstanden. Das Flankenspiel liegt in Umfangsrichtung beziehungsweise Drehrichtung gesehen zwischen den einander gegenüberliegenden Zahnflanken der Trapezgewinde. Dadurch, dass das Flankenspiel und das Kopfspiel größer ausgebildet sind als das Fußspiel wird erreicht, dass vorteilhafte Fettdepots gebildet werden, die bei einer Richtungsumkehr des Antriebs des Spiedelgetriebes derart durch das gegeneinander Verdrehen von Außengewinde zu Innengewinde beeinflusst werden, dass Schmiermittel in den Fettdepots innerhalb der Verzahnung gezielt umgewälzt wird. Dazu wird zweckmäßigerweise die Ansteuerung des Bremskraftverstärkers regelmäßig umgekehrt, um ein Umwälzen des Schmiermittels zwischen den Trapezgewinden zu gewährleisten.

Bevorzugt ist vorgesehen, dass das Flankenspiel 8 bis 12 %, insbesondere 10 %, der Zahnbreite des Trapezgewindes der Spindelmutter beträgt. Damit ist das Flankenspiel schon deutlich größer als das von der DIN-Einheit 3 vorgeschriebene minimale Flankenspiel. Durch die Größe des Flankenspiels wird gewährleistet, dass das Schmiermittel durch die gegeneinander geschobenen Flanken der Zähne nach außen in Richtung des Zahnkopfes gedrängt und dort aufgrund des Kopfspiels bis zu der anderen Zahnflanke gefördert wird. Dadurch wird gewährleistet, dass das Schmiermittel sicher umgewälzt und damit die Trapezgewinde dauerhaft gut geschmiert werden, wodurch Verschleiß und Reibung vermindert und die Lebensdauer des Bremskraftverstärkers erhöht werden.

Bevorzugt ist für diesen Zweck vorgesehen, dass das Kopfspiel 8 bis 12 %, insbesondere 10 %, der Breite des Zahns des Trapezgewindes der Spindelmutter beträgt. Hierdurch wird das Hindurchfördern des Schmiermittels im Kopfbereich des Zahns des Außengewindes gewährleistet.

Gemäß einer bevorzugten Weiterbildung der Erfindung ist vorgesehen, dass das Fußspiel eine sicherheitsrelevante Mindestgröße aufweist. Das Fußspiel ist insofern so klein wie möglich und so groß wie nötig gewählt, um einen sicheren Betrieb des Bremskraftverstärkers, insbesondere des Spindelgetriebes, zu gewährleisten. Dabei wird insbesondere berücksichtigt, dass das Fußspiel derart groß gewählt ist, dass ein Verklemmen des Spindelgetriebes sicher verhindert wird.

Gemäß einer bevorzugten Weiterbildung der Erfindung ist vorgesehen, dass die Spindelstange den Druckkolben bildet. Damit ist der Druckkolben des Hauptbremszylinders integrierter Bestandteil des Bremskraftverstärkers beziehungsweise des Spindelgetriebes. Hierdurch wird eine besonders kompakte Ausführungsform des Bremskraftverstärkers gewährleistet.

Gemäß einer bevorzugten Weiterbildung der Erfindung ist vorgesehen, dass die Spindelmutter eine Außenverzahnung aufweist, die mit einer Innenverzahnung eines Antriebshohlrads des Getriebes in Eingriff steht. Die Spindelmutter ist somit in dem Antriebshohlrad geführt und wird durch dieses angetrieben. Hierdurch wird eine kompakte Kraftübertragung von dem Antriebsmotor auf die Spindelmutter gewährleistet.

Besonders bevorzugt ist vorgesehen, dass die Außenverzahnung und die Innenverzahnung derart ausgebildet sind, dass die Spindelmutter axial zu dem Antriebshohlrad verlagerbar ist. Die Verzahnung zwischen Spindelmutter und Antriebshohlrad gewährleistet also eine axiale Relativbewegung zwischen Spindelmutter und Antriebshohlrad. Dadurch wird insbesondere gewährleistet, dass der Druckkolben, der die Spindelstange bildet, von einem Fahrer beziehungsweise Benutzer durch Betätigen eines Bremspedals unabhängig von dem Bremskraftverstärker betätigen kann. Übt der Benutzer eine Axialkraft auf den Druckkolben aus, so verschiebt er gegebenenfalls die Spindelmutter axial relativ zu dem Antriebshohlrad. Aufgrund der vorteilhaften Verzahnung zwischen Spindelmutter und Antriebshohlrad ist dabei gewährleistet, dass unabhängig von der axialen Relativposition von Spindelmutter zu Antriebshohlrad durch Ansteuern des Elektromotors die Spindelmutter in eine Rotationsbewegung versetzt werden kann, um den Druckkolben mit einer zusätzlichen Betätigungskraft zu beaufschlagen.

Weiterhin ist bevorzugt vorgesehen, dass die Spindelmutter einen mit dem Antriebshohlrad zusammenwirkenden Axialanschlag aufweist. Durch den Axialanschlag wird gewährleistet, dass die Spindelmutter nicht über das Antriebshohlrad hinaus verschoben werden kann. Vielmehr wird ein Endanschlag zur Verfügung gestellt, der eine sichere Ausgangsposition der Spindelmutter gewährleistet.

Besonders bevorzugt ist vorgesehen, dass wenigstens ein Federelement vorhanden ist, das die Spindelmutter mit dem Axialanschlag gegen das Antriebshohlrad drängt. Dadurch ist eine definierte Ausgangsstellung für die verlagerbare Spindelmutter gewährleistet, in welche die Spindelmutter zurückbewegt wird, wenn der Fahrer beispielsweise keine Kraft auf ein Bremspedal, das mit dem Druckkolben verbunden ist, ausübt. Durch das Federelement wird das System beziehungsweise das Getriebe vorgespannt und ein sicherer Betrieb gewährleistet.

Die erfindungsgemäße Bremseinrichtung mit den Merkmalen des Anspruchs 10 zeichnet sich durch den erfindungsgemäßen Bremskraftverstärker aus. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: einen Bremskraftverstärker für den Hauptbremszylinders eines Kraftfahrzeugs in einer vereinfachten Darstellung,
- Figur 2: eine Schnittdarstellung durch ein Getriebe des Bremskraftverstärkers gemäß einem ersten Betriebszustand und
- Figur 3: die Schnittdarstellung des Getriebes gemäß einem zweiten Betätigungszustand.

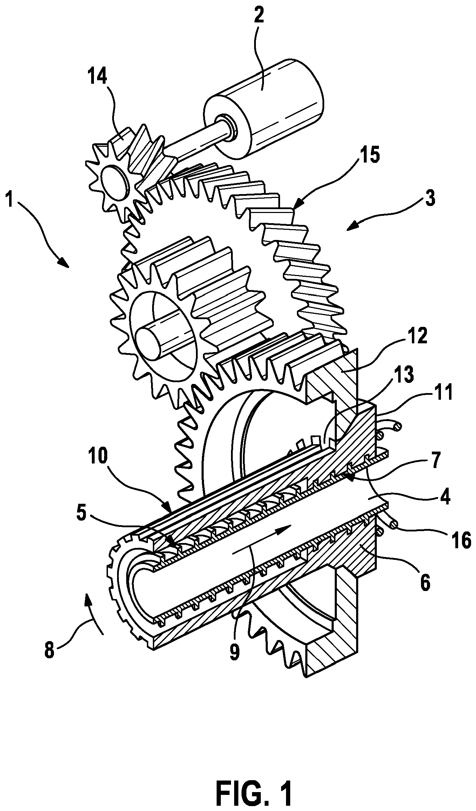

Figur 1 zeigt in einer vereinfachten Darstellung einen Bremskraftverstärker für einen hier nicht näher dargestellten Hauptbremszylinder eines Kraftfahrzeugs. Der Bremskraftverstärker 1 weist einen hier vereinfacht dargestellten Antriebsmotor 2 auf, der als Elektromotor ausgebildet und durch ein Getriebe 3 mit einem Druckkolben wirkverbunden ist. Der Druckkolben ist dabei vorliegend nur abschnittsweise und in einem Längsschnitt dargestellt. Der Druckkolben ist als Hohlstange ausgebildet, die ein Außengewinde 5 aufweist. Axial ist der Druckkolben einendig mit dem Hauptbremszylinder und anderendig mit einem Bremspedal des den Bremskraftverstärker 1 aufweisenden Kraftfahrzeugs mechanisch verbunden. Der Druckkolben ist dabei axial verlagerbar ausgebildet, um bei Betätigen des Bremspedals eine Kraft auf den Hauptbremszylinder zu dessen Betätigung auszuüben.

Der Druckkolben 4 bildet durch das Außengewinde 5 eine Spindelstange, auf welcher eine Spindelmutter 6 drehbar angeordnet ist. Die Spindelmutter 6 weist abschnittsweise ein Innengewinde 7 auf, das mit dem Außengewinde 5 in Eingriff steht. Das Außengewinde 5 und das Innengewinde 7 sind dabei jeweils als Trapezgewinde ausgebildet. Das Außengewinde 5 erstreckt sich dabei axial gesehen über einen mehr als doppelt so großen Abschnitt wie das Innengewinde 7. Wird die Spindelmutter 6 in eine Rotationsbewegung versetzt, wie durch einen Pfeil 8 angedeutet, führt dies durch die ineinandergreifenden Trapezgewinde zu einer axialen Verlagerung des die Spindelstange bildenden Druckkolbens 4, wie durch einen Pfeil 9 gezeigt.

Die Spindelmutter 6 weist außerdem eine Außenverzahnung 10 auf, mit mehreren sich axial erstreckenden Zähnen. Weiterhin weist die Spindelmutter 6 an einem Ende einen Axialanschlag 11 auf, der einen konusförmigen Längsschnitt aufweist.

Das Getriebe 3 weist weiterhin ein Antriebshohlrad 12 auf, das ein mit der Außenverzahnung 10 in Eingriff stehende Innenverzahnung 13 aufweist. Dadurch, dass die Außenverzahnung 10 und die Innenverzahnung 13 axial ausgerichtet sind, ist die Spindelmutter 6 axial zu dem Antriebshohlrad 12 verschiebbar. Weiterhin weist das Antriebshohlrad 12 eine Außenverzahnung auf, mit welcher das Antriebshohlrad 12 mit einem Zwischenzahnrad 15 wirkverbunden ist, das eine Übersetzungsstufe aufweist und mit einem Antriebsritzel 14 des Elektromotors 2 kämmt.

Wird der Elektromotor 2 angesteuert, so wird ein Drehmoment auf das Antriebshohlrad 12 ausgeübt, welches durch die Innenverzahnung 13 die Spindelmutter 6 mitnimmt und in eine Rotationsbewegung versetzt. Weil die Spindelstange 4 beziehungsweise der Druckkolben drehfest gelagert ist, wird durch die Drehung der Spindelmutter 6 eine Axialbewegung des Druckkolbens erzeugt und der Hauptbremszylinder betätigt. Hierdurch kann ein automatischer Bremsvorgang eingeleitet werden oder der Fahrer durch das Erzeugen einer zusätzlichen Bremskraft unterstützt werden. Betätigt der Fahrer das Bremspedal schneller als der Elektromotor 2 reagieren kann oder wenn der Elektromotor 2 beziehungsweise der Bremskraftverstärker 1 einen Defekt aufweist, so ist es ihm möglich den Druckkolben aufgrund der axialen Verlagerbarkeit der Spindelmutter 6 bezüglich des Antriebshohlrads 12 rein mechanisch zu betätigen. Dabei drückt er die Spindelstange zusammen mit der Spindelmutter 6 axial durch das Antriebshohlrad 12. Durch ein Federelement 16, insbesondere Schraubenfeder, wird die Spindelmutter 6 mit dem Axialanschlag 11 gegen das Antriebshohlrad 12 zurückgedrängt, sodass der Axialanschlag 11 an dem Antriebshohlrad 12 anliegt und ein weiteres Verschieben unmöglich ist. Durch das Federelement 16 wird das Getriebe 3 insofern vorgespannt in Richtung eines Ausgangszustands.

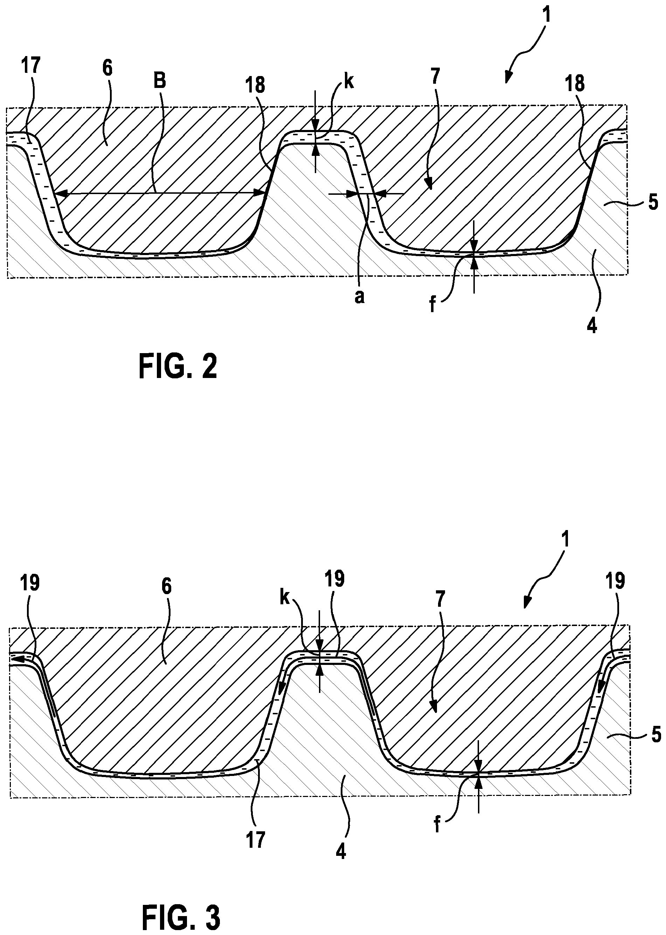

Figur 2 zeigt eine vergrößerte Darstellung des Getriebes 3 im Bereich der Trapezgewinde. Normalerweise werden Trapezgewinde derart gefertigt, dass das Spiel zwischen Innengewinde und Außengewinde, insbesondere das Flankenspiel, möglichst klein ist, um bei einem Drehrichtungswechsel der Spindelmutter Leerhub und Geräusche zu vermeiden. Die vorliegende Ausführungsform sieht jedoch vor, dass ein Kopfspiel k zwischen dem Gewindekopf des Außengewindes 5 und dem Gewindegrund beziehungsweise Gewindefuß des Innengewindes 7, ein Fußspiel f zwischen dem Gewindegrund des Außengewindes 5 und dem Gewindekopf des Innengewindes 7 sowie ein Flankenspiel a einander gegenüberliegender Zahnflanken in einem bestimmen Verhältnis zueinander ausgebildet sind, um die Lebensdauer des Bremskraftverstärkers 1 zu erhöhen.

Vorliegend ist vorgesehen, dass das Kopfspiel k und das Flankenspiel a im Verhältnis zum Fußspiel f größer ausgebildet sind. Insbesondere ist dabei vorgesehen, dass das Flankenspiel a 10 % der Zahnbreite B des Innengewindes 7 der Spindelmutter 6 entspricht. Weiterhin entspricht das Kopfspiel k ebenfalls 10 % der Zahnbreite B der Innenverzahnung 7 der Spindelmutter 6. Das Fußspiel f weist eine Mindestgröße auf, die gewährleistet, dass unter jeglichen erwarteten Betriebs- und Umgebungsbedingen, insbesondere in Bezug auf Temperatur und Luftfeuchtigkeit, ein Verklemmen der Verzahnung sicher verhindert ist. Das Fußspiel f ist insofern unter Berücksichtigung der Mindestgröße so klein wie möglich gewählt. Zweckmäßigerweise ist zwischen dem Außengewinde 5 und dem Innengewinde 7 ein Schmiermittel 17 vorgesehen, das den Verschleiß zwischen Spindelmutter 6 und Druckkolben 4 vermindert. Im Normalbetrieb wird die Arbeitslast über die zu Beginn geschmierte Arbeitsflanke 18 aufgenommen. Um die Arbeitsflanken 18, die im Normalbetrieb zur Kraftübertragung aneinander liegen, regelmäßig mit ausreichend Schmierstoff zu versorgen beziehungsweise nachzuschmieren, wird der Bremskraftverstärker 1 in regelmäßigen Abständen rückwärts betrieben, sodass die Drehrichtung der Spindelmutter 6 umgekehrt wird und die Arbeitsflanken wechseln. Dabei wird das Flankenspiel a überwunden, wie insbesondere in Figur 3 gezeigt. Dabei wird das vorhandene Schmiermittel 17 beim Verschließen des Flankenspiels 8 in den Bereich der Arbeitsflanken 18 verschoben, wie in Figur 3 durch Pfeile 19 gezeigt. Wird das System nun wieder normal betrieben, um beispielsweise eine Bremskraft elektromotorisch zu erzeugen, liegen die Gewinde 5, 7 an ihrer neu geschmierten Arbeitsflanke aneinander an.

Durch die vorliegende Ausbildung des Bremskraftverstärkers 1 wird somit auf einfache Art und Weise eine hohe Lebensdauer erreicht. Eine Logik, die beispielsweise in ein dem Bremskraftverstärker 1 zugeordnetes Steuergerät implementiert ist, gewährleistet dabei, dass die Betätigungsrichtung des Spindelgetriebes regelmäßig zur Umverteilung des Schmiermittels umgekehrt wird.

## Patentansprüche

1. Bremskraftverstärker (1) für einen Hauptbremszylinder eines Kraftfahrzeugs, mit einem Antriebsmotor (2), der durch ein Getriebe (3) mit einem Druckkolben (4) für den Hauptbremszylinder verbunden/verbindbar ist, wobei das Getriebe (3) eine Rotationsbewegung des Antriebsmotors (2) in eine Translationsbewegung des Druckkolbens zum Betätigen des Hauptbremszylinders wandelt, wobei das Getriebe eine drehbare Spindelmutter (6) und eine drehfeste Spindelstange (4) mit ineinandergreifenden Trapezgewinden (5,7) aufweist, wobei die ineinandergreifenden Trapezgewinde (5,7) ein Flankenspiel (a), ein Kopfspiel (k) und ein Fußspiel (f) aufweisen, **dadurch gekennzeichnet, dass** das Flankenspiel (a) und das Kopfspiel (k) jeweils größer ausgebildet sind als das Fußspiel (f).

2. Bremskraftverstärker nach Anspruch 1, **dadurch gekennzeichnet, dass** das Flankenspiel (a) 8 bis 12 %, insbesondere 10 %, der Zahnbreite (B) des Trapezgewindes (7) der Spindelmutter (6) beträgt.

3. Bremskraftverstärker nach einem der vorhergehenden Ansprüche, **dadurch gekennzeichnet, dass** das Kopfspiel 8 bis 12 %, insbesondere 10 %, der Zahnbreite (B) des Trapezgewindes (7) der Spindelmutter (6) beträgt.

4. Bremskraftverstärker nach einem der vorhergehenden Ansprüche, **dadurch gekennzeichnet, dass** das Fußspiel (f) eine sicherheitsrelevante Mindestgröße aufweist.

5. Bremskraftverstärker nach einem der vorhergehenden Ansprüche, **dadurch gekennzeichnet, dass** die Spindelstange (4) den Druckkolben bildet.

6. Bremskraftverstärker nach einem der vorhergehenden Ansprüche, **dadurch gekennzeichnet, dass** die Spindelmutter (6) eine Außenverzahnung (10) aufweist, die mit einer Innenverzahnung (13) eines Antriebshohlrads (12) des Getriebes (3) in Eingriff steht.

7. Bremskraftverstärker nach Anspruch 6, **dadurch gekennzeichnet, dass** die Außenverzahnung (10) und die Innenverzahnung (13) derart ausgebildet sind, dass die Spindelmutter (6) axial zu dem Antriebshohlrad (12) verlagerbar ist.

8. Bremskraftverstärker nach einem der Ansprüche 6 und 7, **dadurch gekennzeichnet, dass** die Spindelmutter (6) einen mit dem Antriebshohlrad (12) zusammenwirkenden Axialanschlag (11) aufweist.

9. Bremskraftverstärker nach Anspruch 8, **gekennzeichnet durch** wenigstens ein Federelement (16), das die Spindelmutter (6) mit dem Axialanschlag (11) gegen das Antriebshohlrad (12) drängt.

10. Bremseinrichtung für ein Kraftfahrzeug, mit einem Bremspedal, das mechanisch mit einem Druckkolben eines Hauptbremszylinders verbunden ist, **gekennzeichnet durch** einen Bremskraftverstärker (1) nach einem der Ansprüche 1 bis 9.

## Claims

1. Brake booster (1) for a brake master cylinder of a motor vehicle, having a drive motor (2) which is connected/can be connected by way of a gear mechanism (3) to a pressure piston (4) for the brake master cylinder, the gear mechanism (3) converting a rotational movement of the drive motor (2) into a translational movement of the pressure piston in order to actuate the brake master cylinder, the gear mechanism having a rotatable spindle nut (6) and a non-rotating spindle rod (4) with trapezoidal threads (5, 7) which engage into one another, the trapezoidal threads (5, 7) which engage into one another having a flank play (a), a tip play (k) and a root play (f), **characterized in that** the flank play (a) and the tip play (k) are in each case of greater configuration than the root play (f).

2. Brake booster according to Claim 1, **characterized in that** the flank play (a) is from 8 to 12%, in particular 10%, of the tooth width (B) of the trapezoidal thread (7) of the spindle nut (6).

3. Brake booster according to either of the preceding claims, **characterized in that** the tip play is from 8 to 12%, in particular 10%, of the tooth width (B) of the trapezoidal thread (7) of the spindle nut (6).

4. Brake booster according to one of the preceding claims, **characterized in that** the root play (f) has a safety-relevant minimum size.

5. Brake booster according to one of the preceding claims, **characterized in that** the spindle rod (4) forms the pressure piston.

6. Brake booster according to one of the preceding claims, **characterized in that** the spindle nut (6) has an external toothing system (10) which is in engagement with an internal toothing system (13) of a drive internal gear (12) of the gear mechanism (3).

7. Brake booster according to Claim 6, **characterized in that** the external toothing system (10) and the internal toothing system (13) are configured in such a way that the spindle nut (6) can be moved axially with respect to the drive internal gear (12).

8. Brake booster according to either of Claims 6 and 7, **characterized in that** the spindle nut (6) has an axial stop (11) which interacts with the drive internal gear (12) .

9. Brake booster according to Claim 8, **characterized by** at least one spring element (16) which presses the spindle nut (6) with the axial stop (11) against the drive internal gear (12).

10. Brake device for a motor vehicle, having a brake pedal which is connected mechanically to a pressure piston of a brake master cylinder, **characterized by** a brake booster (1) according to one of Claims 1 to 9.

## Revendications

1. Servofrein (1) pour un maître-cylindre de frein d'un véhicule automobile, comprenant un moteur d'entraînement (2) qui est relié / peut être relié par le biais d'un engrenage (3) à un piston de compression (4) pour le maître-cylindre de frein, l'engrenage (3) convertissant un mouvement de rotation du moteur d'entraînement (2) en un mouvement de translation du piston de compression en vue d'actionner le maître-cylindre de frein, l'engrenage possédant un écrou de broche (6) rotatif et une tige de broche (4) non tournante ayant des filets trapézoïdaux (5, 7) s'engrenant mutuellement, les filets trapézoïdaux (5, 7) s'engrenant mutuellement possédant un jeu de filet (a), un jeu de tête de dent (k) et un jeu de fond de dent (f), **caractérisé en ce que** le jeu de filet (a) et le jeu de tête de dent (k) sont respectivement réalisés plus grands que le jeu de fond de dent (f).

2. Servofrein selon la revendication 1, **caractérisé en ce que** le jeu de filet (a) est égal à 8 à 12 %, notamment à 10 % de la largeur de dent (B) du filet trapézoïdal (7) de l'écrou de broche (6).

3. Servofrein selon l'une des revendications précédentes, **caractérisé en ce que** le jeu de tête de dent est égal à 8 à 12 %, notamment à 10 % de la largeur de dent (B) du filet trapézoïdal (7) de l'écrou de broche (6) .

4. Servofrein selon l'une des revendications précédentes, **caractérisé en ce que** le jeu de fond de dent (f) possède une taille minimale en rapport avec la sécurité.

5. Servofrein selon l'une des revendications précédentes, **caractérisé en ce que** la tige de broche (4) forme le piston de compression.

6. Servofrein selon l'une des revendications précédentes, **caractérisé en ce que** l'écrou de broche (6) possède une denture extérieure (10) qui est en prise avec une denture intérieure (13) d'une roue à denture intérieure d'entraînement (12) de l'engrenage (3).

7. Servofrein selon la revendication 6, **caractérisé en ce que** la denture extérieure (10) et la denture intérieure (13) sont configurées de telle sorte que l'écrou de broche (6) peut être positionné axialement par rapport à la roue à denture intérieure d'entraînement (12) .

8. Servofrein selon l'une des revendications 6 et 7, **caractérisé en ce que** l'écrou de broche (6) possède une butée axiale (11) qui coopère avec la roue à denture intérieure d'entraînement (12).

9. Servofrein selon la revendication 8, **caractérisé par** au moins un élément ressort (16) qui force l'écrou de broche (6) avec la butée axiale (11) contre la roue à denture intérieure d'entraînement (12).

10. Dispositif de freinage pour un véhicule automobile, comprenant une pédale de frein qui est reliée mécaniquement avec un piston de compression d'un maître-cylindre de frein, **caractérisé par** un servofrein (1) selon l'une des revendications 1 à 9.
